# EUROPÄISCHE PATENTSCHRIFT

(11) **EP 0 674 961 B1**
(45) Veröffentlichungstag und Bekanntmachung des Hinweises auf die Patenterteilung: **13.10.1999**
(21) Anmeldenummer: 95102254.0
(22) Anmeldetag: 18.02.1995
(51) Int. Cl.: B23B 31/00, B23Q 1/00, B23Q 11/00

(54) **Bohreinrichtung aus einer Bohrmaschine und einem Bohrfutter**
Drilling equipment consisting of a drilling machine and a drilling chuck
Dispositif de perçage composé d'une perceuse et d'un mandrin de perçage

(30) Priorität: 02.04.1994 DE 4411523
(43) Veröffentlichungstag der Anmeldung: 04.10.1995
(73) Patentinhaber: Röhm, Günter Horst, D-89567 Sontheim (DE)
(72) Erfinder: Mack, Hans-Dieter, D-89567 Sontheim (DE)
(74) Vertreter: Fay, Hermann, Dipl.-Phys. Dr.

(56) Entgegenhaltungen:
- CH-A- 406 030
- DE-A- 2 417 228
- DE-A- 3 406 668
- DE-A- 3 524 036
- DE-A- 3 735 398
- GB-A- 2 103 125
- US-A- 2 387 412

## Beschreibung

Die Erfindung betrifft eine Bohreinrichtung aus einer Bohrmaschine mit einer Bohrspindel zum drehenden oder drehschlagenden Bohren und aus einem an die Bohrspindel angeschlossenen, ein Bohrwerkzeug aufnehmenden Bohrfutter, letzteres umfassend einen an die Bohrspindel anschließbaren Futterkörper mit geneigt zur Futterachse verlaufenden Führungsbohrungen, in denen verstellbare Futterbacken angeordnet sind, die mit ihren zwischen sich das Bohrwerkzeug haltenden Backenenden in einen im Bohrfutter befindlichen Aufnahmeraum für das Bohrwerkzeug vorstehen, und einen mit der Futterachse koaxialen, mit einem Stellgewinde in die Zahnreihen der Futterbacken eingreifenden Stellring zum Betätigen der Futterbacken, wobei mindestens ein im Bohrfutter verlaufender Leitungskanal vorgesehen ist, der zur Sauberhaltung des Futterinneren von beim Bohren entstehendem Bohrschmutz, insbesondere zur Entfernung solchen Bohrschmutzes aus dem Futterinneren dient.

Ein mit derartigen Leitungskanälen ausgestattetes Bohrfutter ist beispielsweise aus der DE 34 06 668 A1 bekannt. Bei diesem münden die schräg zur Futterachse verlaufenden Leitungskanäle einerseits im Aufnahmeraum an dessen bohrspindelseitigem Ende und andererseits an der Umfangsfläche des Futterkörpers, so daß beim Bohrvorgang in den Aufnahmeraum fallender Bohrschmutz durch die Leitungskanäle nach außen aus dem Bohrfutter hinaus gelangen kann. Jedoch kann durch diese Leitungskanäle nicht verhindert werden, daß sich feines Bohrmehl oder Bohrstaub im Futterinneren festsetzt und die Spannfunktion des Bohrfutters beeinträchtigt. Bilden sich beispielsweise solche Ansätze von Bohrmehl und Bohrstaub zwischen den Futterbacken und den Wandungen der sie im Futterkörper aufnehmenden Führungsbohrungen und/oder zwischen dem Stellgewinde des Stellrings einerseits und andererseits den am Stellgewinde im Eingriff stehenden Zahnreihen er Futterbacken, so kann dies die Beweglichkeit der Futterbacken unzuläßig beeinträchtigen, und zwar insbesondere ihre Drehbeweglichkeit um die Achse der jeweiligen Führungsbohrung. Diese Drehbeweglichkeit, die im Rahmen des freien Spiels zwischen dem Stellgewinde und der darin eingreifenden Zahnreihe besteht, kann zu einer Verbesserung der Spannfunktion des Bohrfutters genutzt werden, wie dies im Einzelnen etwa in DE 41 29 048 A1 beschrieben ist, worauf hier statt weiterer Ausführungen Bezug genommen wird. Wird daher die Drehbarkeit der Futterbacken in den Führungsbohrungen erschwert, kann sich die maximal mögliche Spannkraft des Bohrfutters deutlich verringern.

Die an der Umfangsfläche des Futterkörpers mündenden Leitungskanäle sind von einer Sperrhülse umgegeben und abgeschirmt, so daß zwar Bohrschmutz unter der Wirkung der Schwerkraft durch die Leitungskanäle aus dem Bohrfutter in die Sperrhülse fallen kann, die an der Umfangsfläche des Futterkörpers liegende Mündung aber selber nur schwer zugänglich ist und insbesondere nicht geeignet ist, einen Luftstrom an der als Stauraum wirkenden Sperrhülse vorbei einzukoppeln.

Aus der DE 35 024 036 A1 ist ein Bohrfutter bekannt, bei dem ein Luftstrom zur Reinigung der Werkzeugaufnahme genutzt wird. Das Bohrfutter weißt eine Stellhülse auf, die auf der Innenseite eine Konusfläche besitzt, an der die Spannbacken beim Verdrehen der Stellhülse entlanggleiten. Die Spannbacken sind über den Backenführungskopf an einen Döpper angeschlossen, der als Verlängerung der Bohrspindel ausgebildet ist und deren Drehbewegung auf die Spannbacken und das drehfest mit ihm verbundene Bohrfutter überträgt, das gegenüber dem Döpper axial verschiebbar ist. In der Bohrspindel und im Döpper sind Leitungskanäle ausgebildet, in die vom Kühlgebläse der Bohrmaschine stammende Luft in das axial vordere Ende des Bohrfutters geleitet wird. Da die Luft erst am Ende des Döppers und damit innerhalb der Stellhülse und unterhalb des Backenführungskopfes austritt, wird das Bohrfutter nur in diesem axial vorderen Bereich durchströmt, so daß im rückwartigen Bereich des Bohrfutters jede Reinigungswirkung fehlt. Auch kann insbesondere jede Überkopf-Betrieb Schmutz bis in die Bohrmaschine eindringen. Eine an der axial rückfertigen Stirnfläche des Bohrfutters angeordnete, ins Freie führende Mündung ist nicht vorhanden.

Der Erfindung liegt die Aufgabe zugrunde, eine Bohreinrichtung der eingangs genannten Art so weiter auszubilden, daß Bohrschmutz zu keiner Beeinträchtigung der Spannfunktion des Bohrfutters führen kann.

Diese Aufgabe wird nach der Erfindung bei einer Bohreinrichtung der eingangs genannten Art dadurch gelöst, daß der Leitungskanal an der der Bohrmaschine zugewandten Stirnseite des Bohrfutters eine Mündung besitzt, und daß Luftleitflächen vorgesehen sind, welche die aus Gehäuseöffnungen der Bohrmaschine austretende Kühlluft gegen die der Bohrmaschine zugewandte Stirnseite des Bohrfutters richten und so an der Mündung eine Luftströmung und daraus einen Luftüberdruck oder Luftunterdruck zur Entfernung des Bohrschmutzes nach außen erzeugen.

Bei der erfindungsgemäßen Bohreinrichtung ist das Bohrfutter in der Regel mit mehreren solcher Leitungskanäle ausgestattet, deren Mündungen an dem der Bohrmaschine zugewandten Ende des Bohrfutters einer stärkeren Luftströmung ausgesetzt sind, die, je nach den Strömungsverhältnissen im Einzelnen eine Saug- oder Druckwirkung an den Mündungen der Leitungskanäle erzeugt. Im Bohrfutter entstehen dadurch Druck- und Strömungsverhältnisse, die überraschenderweise sehr wirksam verhindern, daß sich Bohrmehl und -staub feiner und feinster Beschaffenheit im Futterinneren ansetzen und mit der Zeit zu Beeinträchtigungen der Futtereigenschaften führen. Darüber hinaus kann sich, soweit eine Saugwirkung an den Mündungen der Leitungskanäle besteht, der Transport von Bohrschmutz durch die Leitungskanäle hindurch nach außen verbessern, während ein Staudruck an den Mündungen einen Überdruck im Futterinneren ergeben kann, der ebenfalls den Schmutztransport im Futterinneren begünstigen und außerdem von vorn herein ein tieferes Eindringen von feinem Bohrschmutz in das Futterinnere erschweren kann. Durch die erfindungsgemäße Saug- oder Druckbeaufschlagung der Mündungen der Leitungskanäle wird vermutlich eine wirksamere Luftdurchspülung des Futterinneren erzeugt, im Ergebnis aber in jedem Fall erreicht, daß sich störende Schmutzablagerungen im Bohrfutter, und insbesondere zwischen den Futterbacken einerseits und der Wandung der Führungsbohrungen sowie dem Stellgewinde des Stellrings andererseits, nicht mehr bilden. Durch das Zusammenwirken der Luftleitflächen und der vom Kühlgebläse der Bohrmaschine erzeugten Luftströmung wird in besonders einfacher Weise die wirkungsvolle Möglichkeit geschaffen, die Mündungen der Leitungskanäle mit Unter- oder Überdruck zu beaufschlagen.

Im einzelnen kann das in der Weise geschehen, daß die Luftleitflächen wenigstens zum Teil vom einer am Gehäuse an der Bohrmaschine angeordneten, zum Bohrfutter offenen und axial freien Abstand vom Bohrfutter haltenden Leithaube gebildet sind. Auch besteht stattdessen oder ergänzend die Möglichkeit, daß die Luftleitflächen wenigsten von einem zwischen der Bohrmaschine und dem Bohrfutter angeordneten Leitrohr gebildet sind, das in seinem Inneren die Luftströmung gegen das Bohrfutter führt. Sind die Leithaube und das Leitfutter gemeinsam vorgesehen, empfiehlt sich für sie eine axial aufeinanderfolgende Anordnung. Im übrigen empfiehlt sich als einfachste Ausführungsform, daß das Leitrohr dicht oder unter Freilassung eines höchstens schmalen Spaltes am Bohrfutter endet und direkt mit Mündung des Leitungskanals in Strömungsverbindung steht.

Das Leitrohr kann dabei die Bohrspindel mit radialem Abstand umgeben. Es besteht aber auch die Möglichkeit, daß das Leitrohr seitlich neben der Bohrspindel angeordnet ist und die Mündung des Leitungskanals in der Stirnseite des Bohrfutters auf einem mit der Achse der Bohrspindel konzentrischen Kreis liegt, dessen Radius gleich dem Achsenabstand zwischen der Bohrspindel und dem Leitrohr ist. Besonders diese Ausführungsform kann am Ende des gegen die Futterstirnfläche gerichteten Leitrohrs zu einem kräftigen Luftstrahl und entsprechend großem Staudruck führen, wobei im Fall mehrerer Leitungskanäle und dementsprechend mehrerer Mündungen letztere bei der Drehung des Bohrfutters nacheinander am Ende des maschinenfesten Leitrohrs vorbeilaufen. Der aus dem Leitrohr austretende Luftstrom kann dann bei geeigneter Anordnung unmittelbar in die Mündungen der Leitungskanäle im Bohrfutter eintreten.

Um die Strömungsverhältnisse der Luft am maschinenseitigen Ende des Bohrfutters in gewünschter Weise zu beeinflussen, kann es sich auch empfehlen, an dem der Bohrmaschine zugewandten Ende des Bohrfutters eine sich zur Bohrmaschine hin im Querschnitt erweiternde Stauschale vorzusehen, die auch in Verbindung mit der Leithaube und/oder dem Leitrohr zur Anwendung kommen kann.

Eine weitere sehr vorteilhafte Möglichkeit zur Druckbeaufschlagung der Leitungskanäle, die unabhängig vom Kühlgebläse der Bohrmaschine ist, besteht darin, daß zwischen der Bohrmaschine und dem Bohrfutter ein mit diesem umlaufendes Gebläse zur Strömungserzeugung vorgesehen ist. Im einzelnen kann dazu das Gebläse ein Gebläserad mit Gebläseschaufeln aufweisen, die beim Umlauf des Bohrfutters an der Mündung des Leitungskanals einen Überdruck oder einen Unterdruck der Luft ergeben, so daß das Gebläse in Verbindung mit entsprechend gestalteten Strömungsleitelementen, bezogen auf die Mündungen der Leitungskanäle, als Saug- oder Druckgebläse arbeitet. Zweckmäßigerweise ist das Gebläse am Bohrfutter angeordnet. Zur Beeinflussung der vom Gebläse erzeugten Luftströmung kann ein Leitring vorgesehen sein, der vorteilhaft die Gebläseschaufeln an ihren radial äußeren Schaufelenden umgibt und dadurch zugleich als Schutzring dienen kann, der Berührungen der rotierenden Gebläseschaufeln verhindert.

Im Rahmen der Erfindung besteht weiter die Möglichkeit, die Leitungskanäle von der Bohrmaschine her durch die dazu hohl ausgebildete Bohrspindel hindurch mit dem gewünschten Über- oder Unterdruck zu versorgen. Eine dafür bevorzugte Ausführungsform ist dadurch gekennzeichnet, daß sich die Mündung des Leitungskanals in einer im Futterkörper zum Anschluß der Bohrspindel vorgesehenen Spindelaufnahme für das Spindelende befindet und die Bohrspindel einen am Spindelende offenen Luftkanal aufweist, der bohrmaschinenseitig an einen Luftüberdruck oder Luftunterdruck angeschlossen ist und futterseitig in der Spindelaufnahme mit der Mündung des Leitungskanals in Strömungsverbindung steht.

Soweit mehrere Leitungskanäle mit in der Futterstirnseite liegenden Mündungen vorhanden sind, sind diese Mündungen zweckmäßigerweise am Boden einer mit der Futterachse koaxialen Ringnut angordnet, die axial zur Bohrmaschine hin offen ist. Die Ringnut bewirkt eine gleichmäßigere Druckverteilung über die Mündungen der Leitungskanäle hinweg.

Im übrigen können die Leitungskanäle innerhalb des Bohrfutters in verschiedener Weise verlaufen. Eine bevorzugte Ausführungsform ist dadurch gekennzeichnet, daß die Leitungskanäle im Futterkörper verlaufen und ihre an dem der Bohrmaschine zugewandten Ende des Bohrfutters befindlichen Mündungen in der Stirnfläche des Futterkörpers und/oder in dessen Spindelaufnahme liegen. Im einzelnen verlaufen dabei die Leitungskanäle im Futterkörper vorzugsweise zum Aufnahmeraum für das Bohrwerkzeug, zu die Futterbacken aufnehmenden Führungsbohrungen im Futterkörper und/oder zu Hohlräumen, die sich im Bohrfutter an der bohrspindelseitigen Mündung der Führungsbohrungen zwischen dem Futterkörper und dem Stellring befinden. Bei in der Wandung der Führungsbohrungen endenden Leitungskanälen, die für die Sauberhaltung der Führungsbohrungen von besonderer Bedeutung sind, kann es sich empfehlen, daß die Futterbacken mit den Leitungskanälen in Verbindung stehende Reinigungsnuten aufweisen, die längs und/oder quer zur Achse der jeweiligen Führunsbohrung verlaufen können. Bei in den Hohlräumen endenden Leitungskanälen sind die Hohlräume zweckmäßigerweise durch einen in Umfangsrichtung des Bohrfutters verlaufenden Ringkanal verbunden, der durch Aussparungen im Stellring hindurch nach außen geöffnet ist, so daß sich in Verbindung mit den Leitungskanälen eine gute Luftdurchspülung dieser Hohlräume ergibt. - Jedoch müssen die Leitungskanäle nicht zwingend im Futterkörper verlaufen. Das gilt insbes. für den Fall eines Bohrfutters mit zwischen dem Stellring und dem Futterkörper angeordneter, ungewünschte Verdrehungen des Stellrings beim Bohren verhindernder Sperreinrichtung, wie sie beispielsweise in DE 43 13 742.3 beschrieben ist. In einem solchen Fall empfiehlt es sich, die Anordnung so zu treffen, daß wenigstens einer der Leitungskanäle die Bauteile der Sperreinrichtung durchsetzt.

Unabhängig von diesen im einzelnen möglichen Ausgestaltungen empfiehlt es sich natürlich, das Bohrfutter im übrigen so auszubilden, daß der größte Teil des Bohrschmutzes und insbes. dessen gröbere Bestandteile schon möglichst früh beim Eindringen in das Bohrfutter abgefangen und abgeführt werden und daher erst gar nicht tiefer in das Bohrfutter gelangen können. Eine in dieser Hinsicht besonders bevorzugte Ausführungsform ist dadurch gekennzeichnet, daß der Futterkörper einen bohrwerkzeugseitig vor dem Aufnahmeraum angeordneten Kragen aufweist, der im Innendurchmesser etwas größer als der Aufnahmeraum ist und mit einer Innenschulter an den Aufnahmeraum anschließt, und daß in der Kragenwand nach außen führende Öffnungen vorgesehen sind, deren Querschnitt mindestens bis zur Innenschulter reicht. Der in das Bohrfutter fallende Bohrschmutz und vor allem seine gröberen Bestandteile werden dann schon zu einem großen Teil innerhalb des Kragens an der Innenschulter aufgehalten und durch die Öffnungen in der Kragenwand nach außen abgeschleudert, was dann besonders wirksam erfolgt, wenn der Öffnungsquerschnitt in der Kragenwand die Innenschulter anschneidet. Außerdem hat es sich als sehr vorteilhaft erwiesen, daß der Kragen außenseitig eine sich zum Stellring hin erweiternde Leithülse trägt, die mit dem Kragen und dem Futterkörper einen mit den Öffnungen im Kragen in Verbindung stehenden Ringraum bildet, der durch einen Ringspalt zwischen der Leithülse und dem Stellring nach außen offen ist. In dem Ringraum entsteht bei der Rotation des Bohrfutters eine auswärts durch den Ringspalt gerichtete Luftströmung, die auf die Öffnungen im Kragen eine Saugwirkung ausübt und aus den Öffnungen abgesaugten Bohrschmutz sehr effektiv durch den Ringraum und den Ringspalt nach außen befördert. Diese Luftströmung kann auf einfache Weise dadurch sehr wirksam verstärkt werden, daß im Ringraum Querrippen oder andere Vorsprünge vorgesehen sind, die bei der Drehung des Bohrfutters im Sinne von Gebläseschaufeln arbeiten.

Im folgenden wird die Erfindung an in der Zeichnung dargestellten Ausführungsbeispielen näher erläutert; es zeigen:
- Fig. 1: eine nur schematisch dargestellte Bohreinrichtung nach der Erfindung in einer Seitenansicht, teils im Schnitt,
- Fig. 2: eine andere Ausführungsform der erfindungsgemäßen Bohreinrichtung in einer der Darstellung der Fig. 1 entsprechenden Seitenansicht,
- Fig. 3: einen Axialschnitt durch den futterseitigen Teil der Bohreinrichtung nach Fig. 2 in vergrößerter Darstellung,
- Fig. 4: eine andere Ausführungsform der Bohreinrichtung in einer der Fig. 3 entsprechenden Darstellung,
- Fig. 5: eine nochmals andere Ausführungsform der Bohreinrichtung, teils in Ansicht, teils im Schnitt, und
- Fig. 6: den Schnitt VI - VI in Fig. 5.

Bei den in der Zeichnung dargestellten Bohreinrichtungen ist die Bohrmaschine mit 1, das Bohrfutter jeweils mit 2 bezeichnet. Das Bohrfutter 2 ist an der Bohrspindel 3 der Bohrmaschine 1 angeschlossen und nimmt ein selbst nicht dargestelltes Bohrwerkzeug auf. Die Bohrspindel 3 wird innerhalb der Bohrmaschine 1 angetrieben, was nicht Gegenstand der Erfindung ist und daher hier nicht weiter dargestellt und beschrieben ist. Die Bohrmaschine 1 besitzt eine Luftkühlung, wozu üblicherweise innerhalb der Bohrmaschine ein Kühlluftgebläse vorgesehen ist. Die Kühlluft durchströmt in geeigneter, hier nicht näher interessierender Weise die Bohrmaschine 1 und tritt dann an in der Zeichnung mit 4 bezeichneten Gehäuseöffnungen aus.

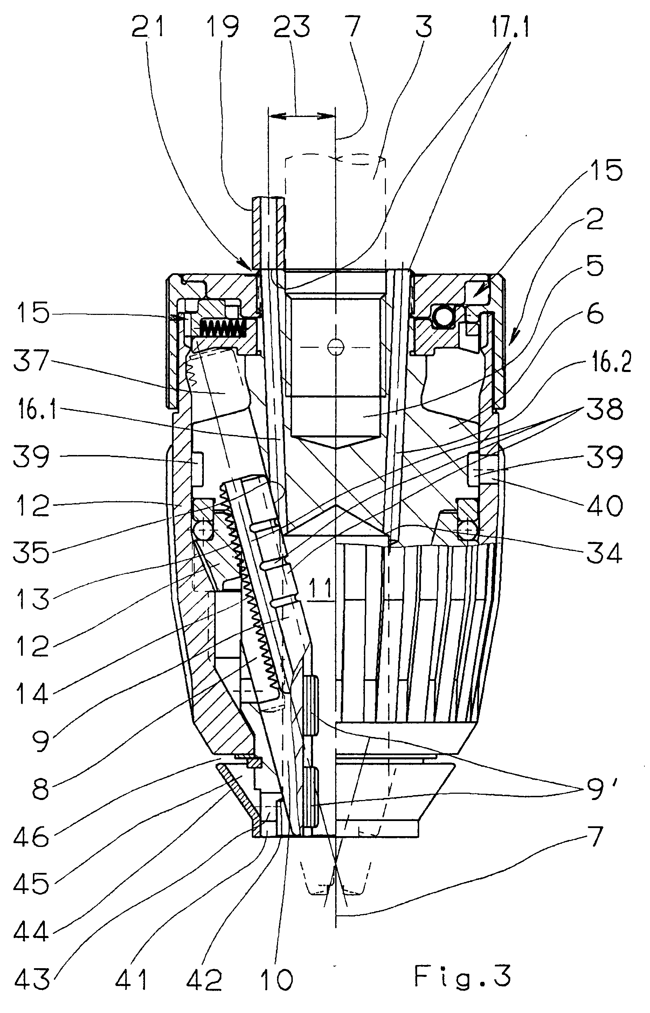

Das Bohrfutter 1 besitzt einen an die Bohrspindel 3 mit einer mit Gewinde versehenen Spindelaufnahme 5 anschließbaren Futterkörper 6. Im an die Bohrspindel 3 angeschlossenen Zustand des Bohrfutters 1 befindet sich das Spindelende in der Spindelaufnahme 5. Weiter umfaßt das Bohrfutter 2 in geneigt zur Futterachse 7 verlaufenden Führungsbohrungen 8 Futterbacken 9, die mit ihren zwischen sich das Bohrwerkzeug haltenden Backenenden 10 in einen im Bohrfutter 2 befindlichen Aufnahmeraum 11 für das Bohrwerkzeug vorstehen. In den Ausführungsbeispielen sind drei solcher Futterbacken 9 in gleichmäßiger Verteilung über den Umfang des Bohrfutters 2 vorhanden. Weiter besitzt das Bohrfutter 2 einen mit der Futterachse 7 koaxialen Stellring 12 für die Betätigung der Futterbacken 9. Wird der Stellring 12 verdreht, verschieben sich je nach Drehrichtung die Futterbacken 9 in ihren Führungsbohrungen 8. Dazu ist der Stellring 12 mit einem entsprechend der Neigung der Führungskanäle 8 verlaufenden Stellgewinde 13 versehen, in das die Futterbacken 9 mit sich über ihren Verstellbereich erstreckenden Zahnreihen 14 eingreifen. Die Spannbacken 9 besitzen einen im wesentlichen kreisförmigen äußeren Umriß, der an der Seite der Zahnreihe 14 abgeflacht ist, so daß sich die Spannbacken 9 in den Führungsbohrungen 8 um deren Achse begrenzt verdrehen können, nämlich im Rahmen des freien Spiels, mit dem der Eingriff der Zahnreihe 14 in das Stellgewinde 13 des Stellrings 12 behaftet ist. Um das Bohrfutter 2 gegen unbeabsichtigtes Öffnen während des Bohrbetriebs zu schützen und im übrigen die Möglichkeit zu schaffen, daß sich das Bohrfutter während des Bohrens begrenzt selbsttätig nachstellen kann, wenn sich die an den Futterbacken 9 vorgesehenen, aus Hartmetall bestehenden Schneiden 9' in den Bohrerschaft eingraben sollten, sind die unerwünschte Verdrehung des Stellrings verhindernde bzw. eine zu weit gehende Nachstellung behindernde Sperreinrichtungen vorgesehen, die in den Fig. 3 bis 5 mit 15 bezeichnet und z. B. in der DE 43 13 742.3 näher beschrieben sind, so daß sie hier keiner weiteren Erörterung bedürfen, weil ihr Aufbau im einzelnen für die Erfindung ohne Bedeutung ist.

Im Bohrfutter verlaufen Leitungskanäle f16.1, 16.2, 16.3, 16.4, 16.5, 16.6, die zur Sauberhaltung des Futterinneren von beim Bohren entstehendem Bohrschmutz und insbes. zur Entfernung solchen Bohrschmutzes aus dem Futterinneren dienen, so daß die Arbeitsweise des Bohrfutters 2 durch solchen Bohrschmutz nicht beeinträchtigt werden kann. Wesentlich für die Erfindung ist, daß diese Leitungskanäle 16.1, 16.2, ..., 16.6 an dem der Bohrmaschine 1 zugewandten Ende des Bohrfutters 2 eine Mündung 17.1, 17.2, 17.3 besitzen und im übrigen Einrichtungen vorgesehen sind, die eine Luftströmung und daraus an diesen Mündungen 17.1, 17.2, 17.3 einen Luftüberdruck oder Luftunterdruck erzeugen.

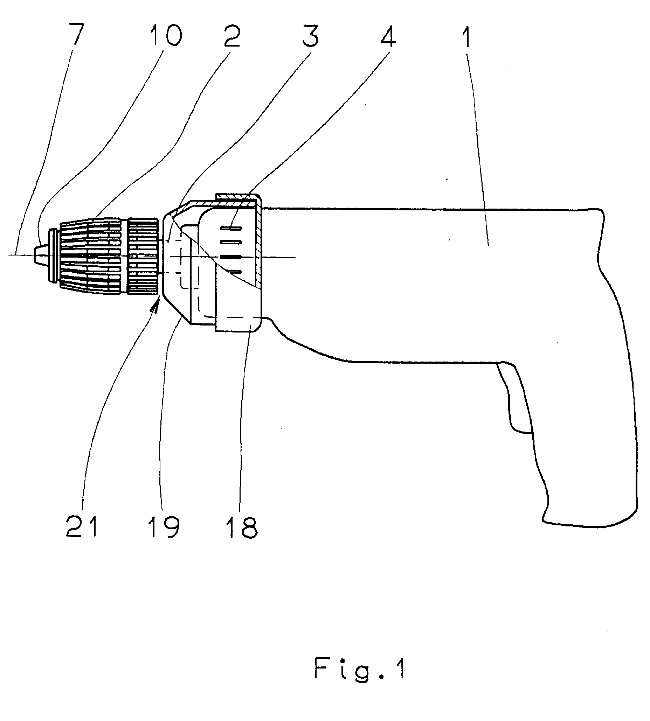

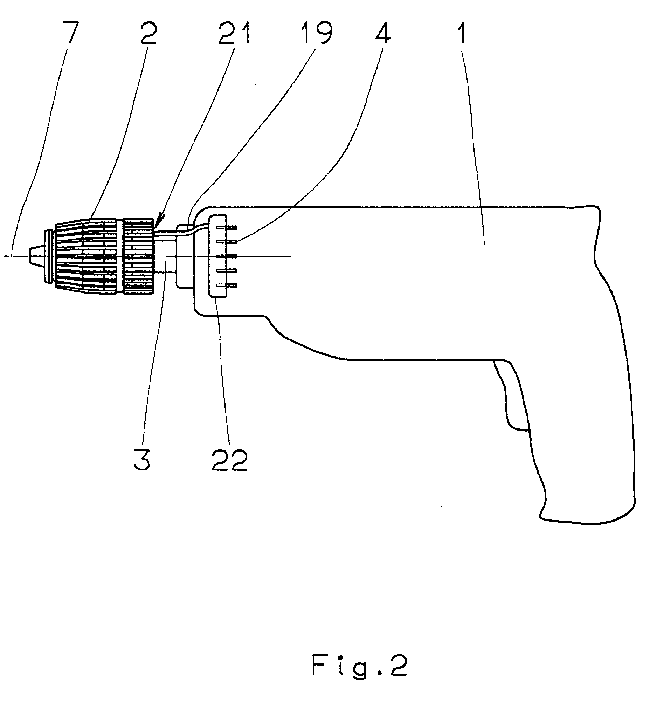

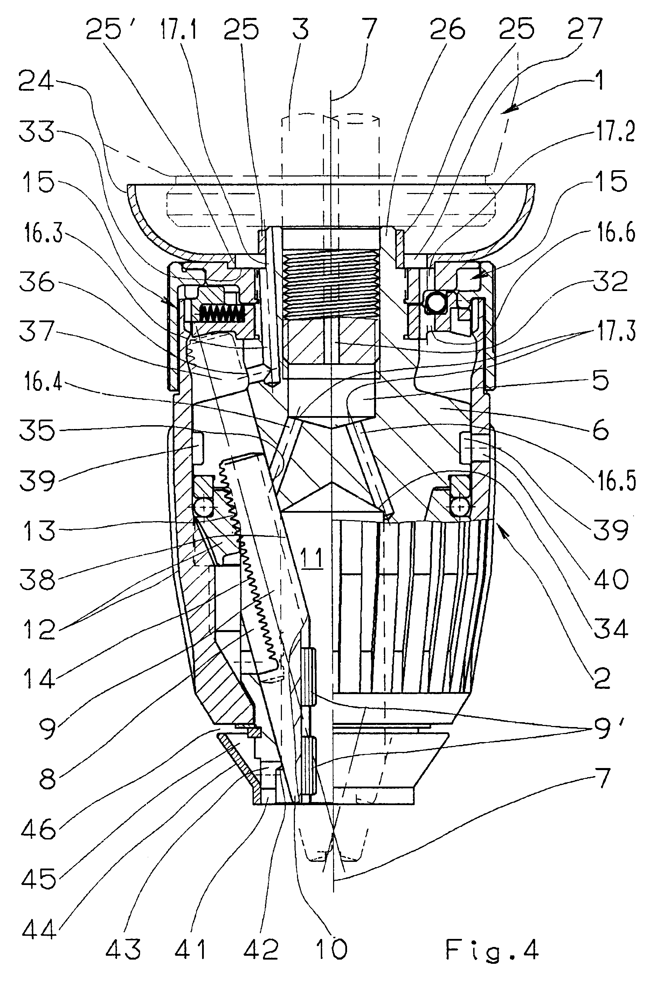

Dazu dienen in den Ausführungsbeispielen nach den Fig. 1 bis 4 Luftleitflächen, welche die aus den Gehäuseöffnungen 4 der Bohrmaschine 1 austretende Kühlluft gegen die der Bohrmaschine 1 zugewandte Stirnseite des Bohrfutters 2 richten. Die Mündungen 17.1, 17.2 der Leitungskanäle 16.1, 16.2, 16.3, 16.6 liegen in dieser Stirnseite, so daß sie von dem durch die Luftleitflächen entsprechend gelenkten Luftstrom beaufschlagt werden. Diese Luftleitflächen können z. T. oder ausschließlich von einer am Gehäuse der Bohrmaschine 1 angeordneten, zum Bohrfutter 1 hin offenen und axial freien Abstand vom Bohrfutter haltenden Leithaube 18 gebildet sein, wie sie aus Fig. 1 ersichtlich ist. Die Luftleitflächen können aber auch, wiederum wenigstens z. T. oder auch vollständig, von einem zwischen der Bohrmaschine 1 und dem Bohrfutter 2 angeordneten Leitrohr 19 gebildet sein, wobei im übrigen die Möglichkeit besteht, die Leithaube 18 und das Leitrohr 19 gemeinsam in axial aufeinander folgender Anordnung vorzusehen, wie dies beispielsweise die Fig. 1 zeigt. Das Leitrohr 19 kann fest am Bohrfutter 2 angeordnet sein und sich mit ihm drehen, so daß beim Bohrbetrieb das Leitrohr 19 sich entsprechend gegenüber der maschinenfesten Leithaube 18 dreht. In diesem Fall kann das Leitrohr 19 dicht am Bohrfutter 2 angeschlossen sein. Ist aber auch das Leitrohr 19 maschinenfest angeordnet, so sollte zwischen dem futterseitigen Rand des Leitrohrs 19 und dem Bohrfutter 2 höchstens ein schmaler freier Spalt 21 bestehen, so daß durch das Leitrohr 19 gegen die maschinenseitige Futterstirnseite gerichtete Luft zu einem Staudruck führen kann. In Fig. 1 umgibt das Leitrohr 19 die Bohrspindel 3 mit radialem Abstand. Im Ausführungsbeispiel nach den Fig. 2 und 3 dagegen ist das Leitrohr 19 seitlich neben der Bohrspindel 3 angeordnet, wobei das Leitrohr 19 maschinenseitig durch einen die Gehäuseöffnungen 4 teilweise überdeckenden Leitrichter 22 angeströmt wird. Die Mündungen 17.1, 17.2 der Leitungskanäle liegen in der Stirnseite des Bohrfutters 2 auf einem mit der Achse 7 der Bohrspindel 3 konzentrischen Kreis, dessen Radius 23 gleich dem Achsenabstand zwischen der Bohrspindel 3 und dem Leitrohr 19 ist, so daß bei der Drehung des Bohrfutters 2 die Mündungen 17.1, 17.2 nacheinander am Leitrohr 19 vorbeilaufen. Es besteht im übrigen die aus Fig. 4 ersichtliche Möglichkeit, an dem der Bohrmaschine 1 zugewandten Ende des Bohrfutters 2 eine sich zur Bohrmaschine 1 hin im Querschnitt erweiternde Stauschale 24 vorzusehen. Eine solche Stauschale 24 kann wahlweise futterfest oder maschinenfest angeordnet sein; im Ausführungsbeispiel nach Fig. 4 ist sie mit einem Innenbund 25 auf einen Hals 26 des Futterkörpers 6 aufgesetzt und mit einer Aussparung 27 versehen, durch die hindurch der Innenraum der Stauschale 24 mit den Mündungen 17.1, 17.2 der Leitungskanäle in Strömungsverbindung steht.

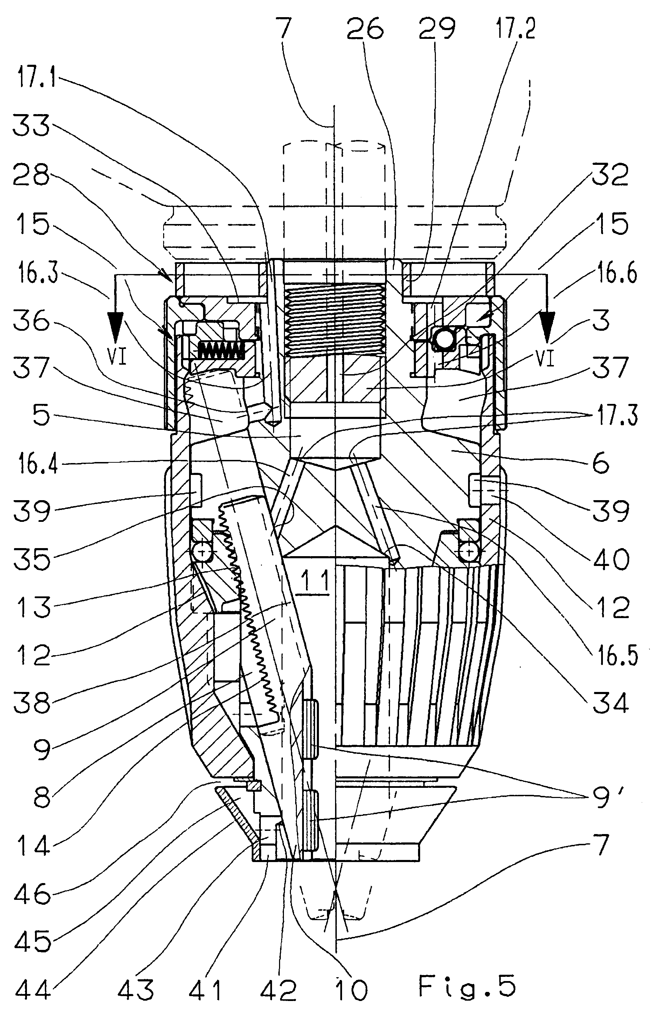

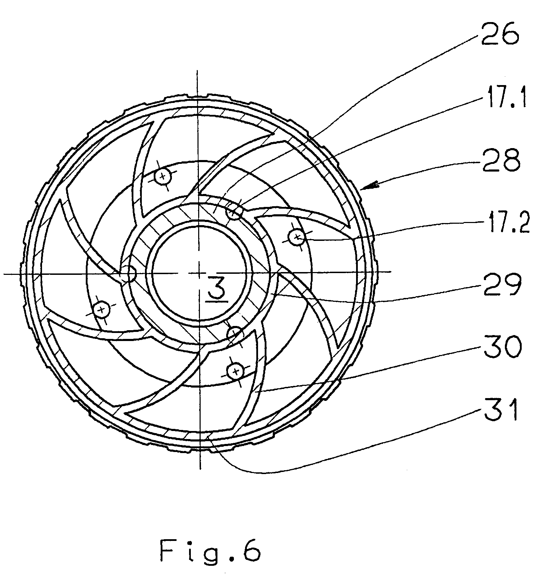

Die Fig. 5 und 6 zeigen eine Ausführungsform, bei der zur Strömungserzeugung nicht das Kühlgebläse der Bohrmaschine 1, sondern ein eigens zwischen der Bohrmaschine 1 und dem Bohrfutter 2 vorgesehenes, mit dem Bohrfutter 2 umlaufendes Gebläse 28 dient. Das Gebläse 28 weist ein Gebläserad aus einer Radnabe 29 mit an die Habe angesetzten Gebläseschaufeln 30 auf, die beim Umlauf des Bohrfutters 2 an den Mündungen 17.1, 17.2 der Leitungskanäle einen Überdruck oder Unterdruck der Luft ergeben, je nach dem, wie zusätzliche Strömungsleitflächen verwirklicht sind. So ist im Ausführungsbeispiel das Gebläse 28 mit einem Leitring 31 umschlossen, der gleichzeitig die Funktion eines Schutzrings erfüllt, so daß beim Hantieren mit der Bohreinrichtung Berührungen der umlaufenden Gebläseschaufeln 30 ausgeschlossen sind.

Bei den Bohreinrichtungen nach den Fig. 4 und 5 ist weiter die Möglichkeit dargestellt, die Bohrspindel 3 mit einem am Spindelende offenen Luftkanal 32 zu versehen, der futterseitig in der Spindelaufnahme 5 mit dort vorhandenen Mündungen 17.3 der Leitungskanäle 16.4, 16.5 in Strömungsverbindung steht und bohrmaschinenseitig in passender Weise an einen Luftüberdruck oder Luftunterdruck angeschlossen ist, der durch das Kühlgebläse der Bohrmaschine 1 erzeugt wird.

Soweit die Mündungen 17.1, 17.2 der Leitungskanäle 1 auf der Futterstirnseite liegen, können sich die Mündungen am Boden einer mit der Futterachse 7 koaxialen Ringnut 33 befinden, die axial in Richtung zur Bohrmaschine 1 hin offen ist. Die äußere Wandung dieser Ringnut 33 dient im Ausführungsbeispiel nach Fig. 4 zum Ansetzen der Stauschale 24 mit ihrem Rand 25'.

Die Leitungskanäle 16.1, ... 16.5 verlaufen in der Regel innerhalb des Futterkörpers 6, wobei ihre Mündungen 17.1 an dem der Bohrmaschine 1 zugewandten Ende des Bohrfutters 2 in der Stirnfläche des Futterkörpers 6 und/oder in der Spindelaufnahme 5 liegen. Andernends können die im Futterkörper 6 verlaufenden Leitungskanäle bei 34 im Aufnahmeraum 11 für das Bohrwerkzeug, bei 35 in den die Futterbacken 9 aufnehmenden Führungsbohrungen 8 und/oder bei 36 in Hohlräumen 37 enden, die sich im Bohrfutter 2 an der bohrspindelseitigen Mündung der Führungsbohrungen 8 zwischen dem Futterkörper 6 und dem Stellring 12 befinden. Die Mündungen 35 der in der Wandung der Führungsbohrungen 8 endenden Leitungskanäle 16.1, 16.4 stehen mit an den Futterbacken 9 vorgesehenen Reinigungsnuten 38 in Verbindung, wobei sich diese Reinigungsnuten 38 längs und/oder quer zur Achse der jeweiligen Führungsbohrung 8 erstrecken können. Soweit Leitungskanäle 16.3, 16.6 bei 36 in den Hohlräumen 37 enden, können diese Hohlräume 37 durch einen in Umfangsrichtung des Bohrfutters verlaufenden Ringkanal 39 verbunden sein, wobei der Ringkanal 39 durch Aussparungen 40 im Stellring 12 nach außen geöffnet ist.

Diese Aussparungen 40 sind zu mehreren über den Umfang des Stellrings 12 verteilt. Weitere in diesen Hohlräumen 37 endende Leitungskanäle 16.6 sind unmittelbar axial durch die die Sperreinrichtungen 15 bildenden Bauteile zur Futterstirnseite geführt. Soweit sich diese Bauteile im Betrieb des Bohrfutters 2 gegenseitig um die Futterachse 7 begrenzt verdrehen können, ist dafür gesorgt, daß die sich entsprechend gegenseitig verdrehenden Abschnitte der Reinigungskanäle 16.6 immer miteinander in Strömungsverbindung bleiben, was im einzelnen aus der Zeichnung allerdings nicht ersichtlich ist.

Um in das Bohrfutter 2 fallenden Bohrschmutz möglichst früh schon beim Eindringen in den Aufnahmeraum 11 abfangen und ableiten zu können, ist in den Ausführungsbeispielen der Futterkörper 6 mit einem bohrwerkzeugseitig vor dem Aufnahmeraum 11 angeordneten Kragen 41 versehen. Der Innendurchmesser dieses Kragens 41 ist etwas größer als der des Aufnahmeraums 11, so daß der Kragen 41 innenseitig mit einer Innenschulter 42 an den Aufnahmeraum 11 anschließt. In der Kragenwand sind nach außen führende Öffnungen 43 vorgesehen, deren Querschnitt mindestens bis zur Innenschulter 42 reicht, in den Ausführungsbeispielen die Innenschulter 42 sogar anschneidet, so daß Bohrschmutz, der innerhalb des Kragens 41 an der Innenschulter 42 aufgehalten wird, wirksam durch die Öffnungen 43 nach außen abgeschleudert wird. Der Kragen 41 trägt außenseitig auch eine sich zum Stellring 12 hin erweiternde kegelige Leithülse 44, die einen mit den Öffnungen 43 im Kragen 41 in Verbindung stehenden Ringraum 45 bildet, der durch einen Ringspalt 46 zwischen der Leithülse 44 und dem Stellring 12 nach außen offen ist. In diesem Ringraum 45 entsteht bei der Rotation des Bohrfutters 2 eine nach außen durch den Ringspalt 46 gerichtete Luftströmung, die sehr wirksam Bohrschmutz durch die Kragenöffnungen 43 und den Ringspalt 46 nach außen fördert. Im Ringraum 45 können im einzelnen nicht dargestellte Querrippen oder andere Vorsprünge vorgesehen sein, die bei der Drehung des Bohrfutters 2 im Sinne von Gebläseschaufeln arbeiten.

## Patentansprüche

1. Bohreinrichtung aus einer Bohrmaschine (1) mit einer Bohrspindel (3) zum drehenden oder drehschlagenden Bohren und aus einem an die Bohrspindel (3) angeschlossenen, ein Bohrwerkzeug aufnehmenden Bohrfutter (2), letzteres umfassend einen an die Bohrspindel (3) anschließbaren Futterkörper (6) mit geneigt zur Futterachse (7) verlaufenden Führungsbohrungen (8), in denen verstellbare Futterbacken (9) angeordnet sind, die mit ihren zwischen sich das Bohrwerkzeug haltenden Backenenden (10) in einen im Bohrfutter (2) befindlichen Aufnahmeraum (11) für das Bohrwerkzeug vorstehen, und einen mit der Futterachse (7) koaxialen, mit einem Stellgewinde (13) in die Zahnreihen (14) der Futterbacken (8) eingreifenden Stellring (12) zum Betätigen der Futterbacken (9), wobei mindestens ein im Bohrfutter (2) verlaufender Leitungskanal (16.1, 16.2, 16.3, 16.4, 16.5, 16.6) vorgesehen ist, der zur Sauberhaltung des Futterinneren von beim Bohren entstehendem Bohrschmutz, insbes. zur Entfernung solchen Bohrschmutzes aus dem Futterinneren dient, dadurch gekennzeichnet, daß der Leitungskanal (16.1, 16.2, 16.3, 16.4, 16.5, 16.6) an der der Bohrmaschine (1) zugewandten Stirnseite des Bohrfutters (2) eine Mündung (17.1, 17.2) besitzt, und daß Luftleitflächen vorgesehen sind, welche die aus Gehäuseöffnungen (14) der Bohrmaschine (1) austretende Kühlluft gegen die der Bohrmaschine (1) zugewandte Stirnseite des Bohrfutters (2) richten und so an der Mündung (17.1, 17.2) eine Luftströmung und und daraus einen Luftüberdruck oder Luftunterdruck zur Entfernung des Bohrschmutzes nach außen erzeugen.

2. Bohreinrichtung nach Anspruch 1, dadurch gekennzeichnet, daß die Luftleitflächen wenigstens zum Teil von einer am Gehäuse der Bohrmaschine (1) angeordneten, zum Bohrfutter (2) hin offenen und axial freien Abstand vom Bohrfutter haltenden Leithaube (18) gebildet sind.

3. Bohreinrichtungen nach Anspruch 1 oder 2, dadurch gekennzeichnet, daß die Luftleitflächen wenigstens z. T. von einem zwischen der Bohrmaschine (1) und dem Bohrfutter (2) angeordneten Leitrohr (19) gebildet sind.

4. Bohreinrichtung nach den Ansprüchen 2 und 3, dadurch gekennzeichnet, daß die Leithaube (18) und das Leitrohr (19) gemeinsam in einer axial aufeinander folgenden Anordnung vorgesehen sind.

5. Bohreinrichtung nach Anspruch 3 oder 4, dadurch gekennzeichnet, daß das Leitrohr (19) dicht oder unter Freilassung eines höchstens schmalen Spaltes (21) am Bohrfutter (2) endet und mit der Mündung (17.1, 17.2) des Leitungskanals in Strömungsverbindung steht.

6. Bohreinrichtung nach Anspruch 5, dadurch gekennzeichnet, daß das Leitrohr (19) die Bohrspindel (3) mit radialem Abstand umgibt.

7. Bohreinrichtung nach Anspruch 5, dadurch gekennzeichnet, daß das Leitrohr (19) seitlich neben der Bohrspindel (3) angeordnet ist und die Mündung (17.1) des Leitungskanals (16.1, 16.2) in der Stirnseite des Bohrfutters (2) auf einem mit der Achse (7) der Bohrspindel (3) konzentrischen Kreis liegt, dessen Radius gleich dem Achsenabstand (23) zwischen der Bohrspindel (3) und dem Leitrohr (19) ist.

8. Bohreinrichtung nach einem der Ansprüche 1 bis 7, dadurch gekennzeichnet, daß an dem der Bohrmaschine (1) zugewandten Ende des Bohrfutters (2) eine sich zur Bohrmaschine hin im Querschnitt erweiternde Stauschale (24) vorgesehen ist.

9. Bohreinrichtung nach einem der Ansprüche 1 bis 8, dadurch gekennzeichnet, daß zwischen der Bohrmaschine (1) und dem Bohrfutter (2) ein mit diesem umlaufendes Gebläse (28) zur Strömungserzeugung vorgesehen ist.

10. Bohreinrichtung nach Anspruch 9, dadurch gekennzeichnet, daß das Gebläse (28) ein Gebläserad mit Gebläseschaufeln (30) aufweist, die beim Umlauf des Bohrfutters (2) an der Mündung (17.1, 17.2) des Leitungskanals (16.3, 16.6) einen Überdruck oder einen Unterdruck der Luft ergeben.

11. Bohreinrichtung nach Anspruch 9 oder 10, dadurch gekennzeichnet, daß das Gebläse (28) am Bohrfutter (2) angeordnet ist.

12. Bohreinrichtung nach den Ansprüchen 9 bis 11, dadurch gekennzeichnet, daß das Gebläse (28) einen Leitring (31) umfaßt.

13. Bohreinrichtung nach Anspuch 12, dadurch gekennzeichnet, daß der Leitring (31) die Gebläseschaufeln (30) an ihren radial äußeren Schaufelenden umgibt.

14. Bohreinrichtung nach einem der Ansprüche 1 bis 13, dadurch gekennzeichnet, daß sich die Mündung (17.3) des Leitungskanals (16.4, 16.5) in einer im Futterkörper (6) zum Anschluß der Bohrspindel (3) vorgesehenen Spindelaufnahme (5) für das Spindelende befindet und die Bohrspindel (3) einen am Spindelende offenen Luftkanal (32) aufweist, der bohrmaschinenseitig an einen Luftüberdruck oder Luftunterdruck angeschlossen ist und futterseitig in der Spindelaufnahme (5) mit der Mündung (17.3) des Leitungskanals (16.4, 16.5) in Strömungsverbindung steht.

15. Bohreinrichtung nach einem der Ansprüche 1 bis 14, dadurch gekennzeichnet, daß bei mehreren Leitungskanälen (16.3, 16.6) mit in der Futterstirnseite liegenden Mündungen (17.1, 17.2) letztere am Boden einer mit der Futterachse (7) koaxialen Ringnut (33) angeordnet sind, die axial zur Bohrmaschine (1) hin offen ist.

16. Bohreinrichtung nach einem der Ansprüche 1 bis 15, dadurch gekennzeichnet, daß die Leitungskanäle (16.1 bis 16.5) im Futterkörper (6) verlaufen und ihre an dem der Bohrmaschine (1) zugewandten Ende des Bohrfutters (2) befindlichen Mündungen (17.1, 17.2, 17.3) in der Stirnfläche des Futterkörpers (6) und/oder in dessen Spindelaufnahme (5) liegen.

17. Bohreinrichtung nach Anspruch 16, dadurch gekennzeichnet, daß die im Futterkörper (6) verlaufenden Leitungskanäle (16.1 bis 16.5) zum Aufnahmeraum (11) für das Bohrwerkzeug, zu die Futterbacken (9) aufnehmenden Führungsbohrungen (8) im Futterkörper (6) und/oder zu Hohlräumen (37) verlaufen, die sich im Bohrfutter (2) an der bohrspindelseitigen Mündung der Führungsbohrungen (8) zwischen dem Futterkörper (6) und dem Stellring (12) befinden.

18. Bohreinrichtung nach Anspruch 17, dadurch gekennzeichnet, daß bei in der Wandung der Führungsbohrungen (8) endenden Leitungskanälen (16.1, 16.4) die Futterbacken (9) mit den Leitungkanälen in Verbindung stehende Reinigungsnuten (38) aufweisen, die längs und/oder quer zur Achse der jeweiligen Führungsbohrung (8) verlaufen.

19. Bohreinrichtung nach Anspruch 17, dadurch gekennzeichnet, daß bei in den Hohlräumen (37) endenden Leitungskanälen (16.3) die Hohlräume (37) durch einen in Umfangsrichtung des Bohrfutters (2) verlaufenden Ringkanal (39) verbunden sind, der durch Aussparungen (40) im Stellring (12) nach außen geöffnet ist.

20. Bohreinrichtung nach einem der Ansprüche 1 bis 15, dadurch gekennzeichnet, daß bei einem Bohrfutter (2) mit zwischen dem Stellring (12) und dem Futterkörper (6) angeordneter, ungewünschte Verdrehungen des Stellrings (12) verhindernder Sperreinrichtung (15) wenigstens einer der Längskanäle (16.6) die Bauteile der Sperreinrichtung (15) durchsetzt.

21. Bohreinrichtung nach einem oder mehreren der Ansprüche 1 bis 20, dadurch gekennzeichnet, daß der Futterkörper (6) einen bohrwerkzeugseitig vor dem Aufnahmeraum (11) angeordneten Kragen (41) aufweist, der im Innendurchmesser etwas größer als der Aufnahmeraum (11) ist und mit einer Innenschulter (42) an den Aufnahmeraum (11) anschließt, und daß in der Kragenwand nach außen führende Öffnungen (43) vorgesehen sind, deren Querschnitt mindestens bis zur Innenschulter (42) reicht.

22. Bohreinrichtung nach Anspruch 21, dadurch gekennzeichnet, daß der Öffnungsquerschnitt in der Kragenwand die Innenschulter (42) anschneidet.

23. Bohreinrichtung nach Anspruch 21 oder 22, dadurch gekennzeichnet, daß der Kragen (41) außenseitig eine sich zum Stellring hin erweiternde Leithülse (44) trägt, die mit dem Kragen (41) und dem Futterkörper (6) einen mit den Öffnungen (43) im Kragen (41) in Verbindung stehenden Ringraum (45) bildet, der durch einen Ringspalt (46) zwischen der Leithülse (44) und dem Stellring (12) nach außen offen ist.

24. Bohreinrichtung nach Anspruch 23, dadurch gekennzeichnet, daß im Ringraum (45) Querrippen oder andere Vorsprünge vorgesehen sind, die bei der Drehung des Bohrfutters (2) im Sinne von Gebläseschaufeln arbeiten.

## Claims

1. A drilling apparatus comprising a drilling machine (1) with a drilling spindle (3) for rotary or hammer drilling and a drilling chuck (2) which is connected to the drilling spindle (3) and which accommodates a drilling tool. the drilling chuck including a chuck body (6) which can be connected to the drilling spindle (3) and which has guide bores (8) which extend inclinedly relative to the chuck axis (7) and in which there are arranged displaceable chuck jaws (9) which with their jaw ends (10) that hold the drilling tool between them project into a receiving space (11) in the drilling chuck (2) for the drilling tool. and a setting ring (12) which is coaxial with the chuck axis (7) and which engages with a setting screwthread (13) into the rows of teeth (14) of the chuck jaws (9) for actuation of the chuck jaws (9), wherein there is provided at least one duct (16.1. 16.2, 16.3, 16.4. 16.5. 16.6) which extends in the drilling chuck (2) and which serves to keep the interior of the chuck clean of drilling dirt which is produced in the drilling operation, in particular for the removal of such drilling dirt from the interior of the chuck, characterised in that at the end of the drilling chuck (2) which is towards the drilling machine (1) the duct (16.1, 16.2, 16.3, 16.4, 16.5, 16.6) has a mouth (17.1, 17.2) and that there are provided air guide surfaces which direct the cooling air that issues from openings (14) in the housing of the drilling machine (1) towards the end of the drilling chuck (2) that is towards the drilling machine (1) and thus produce at the mouth (17.1, 17.2) an air flow and therefrom an increased air pressure or a reduced air pressure for removal of the drilling dirt to the exterior.

2. A drilling apparatus according to claim 1 characterised in that the air guide surfaces are at least in part formed by a guide cowl (18) which is arranged on the housing of the drilling machine (1) and which is open towards the drilling chuck (2) and which maintains an axially free spacing from the drilling chuck.

3. A drilling apparatus according to claim 1 or claim 2 characterised in that the air guide surfaces are at least in part formed by a guide tube (19) arranged between the drilling machine (1) and the drilling chuck (2).

4. A drilling apparatus according to claims 2 and 3 characterised in that the guide cowl (18) and the guide tube (19) are disposed jointly in an axially successive arrangement.

5. A drilling apparatus according to claim 3 or claim 4 characterised in that the guide tube (19) terminates in close relationship or leaving free a very narrow gap (21) at the drilling chuck (2) and is in flow communication with the mouth (17.1, 17.2) of the duct.

6. A drilling apparatus according to claim 5 characterised in that the guide tube (19) surrounds the drilling spindle (3) at a radial spacing.

7. A drilling apparatus according to claim 5 characterised in that the guide tube (19) is arranged laterally beside the drilling spindle (3) and the mouth (17.1) of the duct (16.1, 16.2) is disposed in the end face of the drilling chuck (2) on a circle which is concentric with the axis (7) of the drilling spindle (3) and whose radius is equal to the spacing (23) between the axes of the drilling spindle (3) and the guide tube (19).

8. A drilling apparatus according to one of claims 1 to 7 characterised in that provided at the end of the drilling chuck (2) that is towards the drilling machine (1) is a ram air casing portion (24) which increases in cross-section towards the drilling machine.

9. A drilling apparatus according to one of claims 1 !0 8 characterised in that provided between the drilling machine (1) and the drilling chuck (2) is a fan (28) which rotates with the latter to produce an air flow.

10. A drilling apparatus according to claim 9 characterised in that the fan (28) has a fan wheel with fan blades (30) which when the drilling chuck (2) rotates produce an increased air pressure or a reduced air pressure at the mouth (17.1, 17.2) of the duct (16.3, 16.6).

11. A drilling apparatus according to claim 9 or claim 10 characterised in that the fan (28) is arranged on the drilling chuck (2).

12. A drilling apparatus according to claims 9 to 11 characterised in that the fan (28) includes a guide ring (31).

13. A drilling apparatus according to claim 12 characterised in that the guide ring (31) surrounds the fan blades (30) at their radially outward blade ends.

14. A drilling apparatus according to one of claims 1 to 13 characterised in that the mouth (17.3) of the duct (16.4, 16.5) is disposed in a spindle receiving means (5) for the drilling spindle end. which is provided in the chuck body (6) for connection of the drilling spindle (3) and the drilling spindle (3) has an air passage (32) which is open at the spindle end and which at the drilling machine end is connected to an increased air pressure or a reduced air pressure and at the chuck end is in flow communication in the spindle receiving means (5) with the mouth (17.3) of the duct (16.4, 16.5).

15. A drilling apparatus according to one of claims 1 to 14 characterised in that when there are a plurality of ducts (16.3, 16.6) with mouths (17.1, 17.2) disposed in the end of the chuck, said mouths are arranged at the bottom of an annular groove (33) which is coaxial with the chuck axis (7) and which is open axially towards the drilling machine (1).

16. A drilling apparatus according to one of claims 1 to 15 characterised in that the ducts (16.1 to 16.5) extend in the chuck body (6) and their mouths (17.1, 17.2, 17.3) which are disposed at the end of the drilling chuck (2) that is towards the drilling machine (1) are disposed in the end face of the chuck body (6) and/or in the spindle receiving means (5) thereof.

17. A drilling apparatus according to claim 16 characterised in that the ducts (16.1 to 16.5) which extend in the chuck body (6) extend to the receiving space (11) for the drilling chuck, to guide bores (8) in the chuck body (6) for receiving the chuck jaws (9) and/or to cavities (37) which are provided in the drilling chuck (2) at the drilling spindle-end mouth of the guide bores (8) between the chuck body (6) and the setting ring (12).

18. A drilling apparatus according to claim 17 characterised in that, with ducts (16.1, 16.4) terminating in the wall of the guide bores (8). the chuck jaws (9) have cleaning grooves (38) which communicate with the ducts and which extend lengthwise and/or transversely with respect to the axis of the respective guide bore (8).

19. A drilling apparatus according to claim 17 characterised in `hat with ducts (16.3) terminating in the cavities (37) the cavities (37) are connected by an annular passage (39) which extends in the peripheral direction of the drilling chuck (2) and which is open outwardly through openings (40) in the setting ring (12).

20. A drilling apparatus according to one of claims 1 to 15 characterised in that in a drilling chuck (2) with a locking device 15) which is arranged between the setting ring (12) and the chuck body (6) for preventing unwanted rotary movements of the setting ring (12) at least one of the longitudinal ducts (16.6) passes through the components of the locking device (15).

21. A drilling apparatus according to one or more of clams 1 to 20 characterised in that the chuck body (6) has a collar (41) which is arranged at the drilling tool end in front of the receiving space (11) and which is somewhat larger in internal diameter than the receiving space (11) and which with an internal shoulder (42) adjoins the receiving space (11) and that there are provided openings (43) which lead outwardly in the wall of the collar, the cross-section of the openings extending at least to the internal shoulder (42).

22. A drilling apparatus according to claim 21 characterised in that the cross-section of the openings in the collar wall cuts into the internal shoulder (42).

23. A drilling apparatus according to claim 21 or claim 22 characterised in that on the outside the collar (41) carries a guide sleeve (44) which enlarges towards the setting ring and which with the collar (41) and the chuck body (46) forms an annular space (45) which communicates with the openings (43) in the collar (41) and which is open outwardly through an annular gap (46) between the guide sleeve (44) and the setting ring (12).

24. A drilling apparatus according to claim 23 characterised in that provided in the annular space (45) are transverse ribs or other projections which act in the manner of fan blades when the drilling chuck (2) rotates.

## Revendications

1. Dispositif de perçage comprenant une perceuse (1) avec une broche de perçage (3) pour le perçage simple, sans percussion, et le perçage à percussion, avec un mandrin de perçage (2) qui est lié à la broche de perçage (3) et reçoit un outil de perçage, ledit mandrin comprenant un corps de mandrin (6) qui peut être lié à la broche de perçage (3) et est pourvu de trous de guidage (8) inclinés par rapport à l'axe (7) du mandrin, dans lesquels sont montés des mors (9) réglables qui, par leurs extrémités de mors (10) tenant entre elles l'outil de perçage, font saillie dans une chambre de réception (11) pour l'outil de perçage, aménagée dans le mandrin de perçage (2), et avec une bague de réglage (12) qui, par un filetage de réglage, est en prise avec les rangées de dents (14) des mors (9) aux fins d'actionner les mors (9), au moins un conduit (16.1, 16.2, 16.3, 16.4, 16.5, 16.6) qui s'étend à l'intérieur du mandrin de perçage (2) étant prévu, lequel conduit sert à maintenir l'intérieur du mandrin propre de la poussière et des salissures générées lors du perçage, en particulier à éliminer les salissures de perçage de l'intérieur du mandrin, caractérisé par le fait que le conduit (16.1, 16.2, 16.3, 16.4, 16.5, 16.6) comporte une embouchure (17.1, 17.2) dans la face frontale du mandrin de perçage (2) tournée vers la perceuse (1) et que des surfaces de guidage d'air sont prévues, qui dirigent de l'air de refroidissement sortant par des ouvertures dans le corps (14) de la perceuse (1) vers la face frontale du mandrin de perçage (2) tournée vers la perceuse (1) et produisent ainsi au niveau de l'embouchure (17.1, 17.2) un écoulement d'air et avec celui-ci une surpression d'air ou une dépression pour évacuer vers l'extérieur les salissures de perçage,

2. Dispositif de perçage selon la revendication 1, caractérisé par le fait que les surfaces de guidage d'air sont formées au moins partiellement par une coiffe de guidage (18) disposée sur le corps de la perceuse (1), ouverte en direction du mandrin (2) et maintenue à une certaine distance axiale du mandrin de perçage (2).

3. Dispositif de perçage selon la revendication 1 ou 2, caractérisé par le fait que les surfaces de guidage d'air sont formées au moins partiellement par un tube de guidage (19) disposé entre la perceuse (1) et le mandrin de perçage (2).

4. Dispositif de perçage selon les revendications 2 et 3, caractérisé par le fait que la coiffe de guidage (18) et le tube de guidage (19) sont sont présents simultanément et sont disposés l'un derrière l'autre dans la direction axiale.

5. Dispositif de perçage selon la revendication 3 ou 4, caractérisé par le fait que le tube de guidage (19) se termine très près du mandrin de perçage (2) ou en laissant au maximum un très faible jeu (21) et est en communication d'écoulement avec l'embouchure (17.1, 17.2) du conduit.

6. Dispositif de perçage selon la revendication 5, caractérisé par le fait que le tube de guidage (19) entoure la broche de perçage (3) à distance radiale de celle-ci.

7. Dispositif de perçage selon la revendication 5, caractérisé par le fait que le tube de guidage (19) est disposé latéralement près de la broche de perçage (3) et que l'embouchure (17.1) du conduit (16.1, 16.2) est située dans la surface frontale du mandrin de perçage (2) sur un cercle qui est concentrique avec l'axe (7) de la broche de perçage (3) et dont le rayon est égal à la distance entre axes de la broche de perçage (3) et du tube de guidage (19.

8. Dispositif de perçage selon une des revendications 1 à 7, caractérisé par le fait qu'une coupelle d'étranglement (24) dont la section croît en direction de la perceuse est prévue à l'extrémité du mandrin de perçage (2) tournée vers la perceuse (1).

9. Dispositif de perçage selon une des revendications 1 à 8, caractérisé par le fait qu'un ventilateur (28) qui tourne avec le mandrin de perçage (2) est prévu entre la perceuse (1) et le mandrin de perçage (2) aux fins de produire l'écoulement d'air.

10. Dispositif de perçage selon la revendication 9, caractérisé par le fait que le ventilateur (28) comporte une roue de ventilateur avec des ailettes (30) qui, lors de la rotation du mandrin de perçage (2), produisent une pression ou une dépression d'air à l'embouchure (17.1, 17.2) du conduit (16.3, 16.6).

11. Dispositif de perçage selon la revendication 9 ou 10, caractérisé par le fait que le ventilateur (28) est disposé sur le mandrin de perçage (2).

12. Dispositif de perçage selon les revendications 9 à 11, caractérisé par le fait que le ventilateur (28) comporte une bague déflectrice (31).

13. Dispositif de perçage selon la revendication 12, caractérisé par le fait que la bague déflectrice (31) entoure les ailettes de ventilateur (30) à leur extrémité extérieure dans la direction radiale.

14. Dispositif de perçage selon une des revendications 1 à 13, caractérisé par le fait que l'embouchure (17.3) du conduit (16.4, 16.5) est située dans un logement de broche (5) prévu dans le corps de mandrin (6) pour la liaison avec la broche de perçage (3) et que la broche deperçage (3) comporte un canal à air (32) ouvert à l'extrémité de la broche, qui est relié côté perceuse à une pression d'air positive ou à une pression d'air négative et est en communication d'écoulement côté mandrin, dans le logement de broche (5), avec l'embouchure du conduit (16.4, 16.5).

15. Dispositif de perçage selon une des revendications 1 à 14, caractérisé par le fait que dans le cas de plusieurs conduits (16.3, 16.6) avec des embouchures (17.1, 17.2) qui débouchent dans la face frontale du mandrin, lesdites embouchures sont situées dans le fond d'une gorge annulaire (33) coaxiale avec l'axe de mandrin (7), ouverte axialement en direction de la perceuse (1).

16. Dispositif de perçage selon une des revendications 1 à 15, caractérisé par le fait que les conduits (16.1, 16.5) s'étendent dans le corps de mandrin (6) et que leurs embouchures (17.1, 17.2, 17.3) situées à l'extrémité du mandrin de perçage (2) tournée vers la perceuse (1) sont disposées dans la surface frontale du corps de mandrin (6) et/ou dans le logement de broche (5) de celui-ci.

17. Dispositif de perçage selon la revendication 16, caractérisé par le fait que les conduits (16.1 à 16.5) dans le corps de mandrin (6) menant à la chambre réceptrice (11) pour l'outil de perçage s étendent jusqu'aux trous de guidage (8) dans le mandrin (2) recevant les mors (9) et/ou jusqu'aux cavités (37) qui sont aménagées dans le mandrin de perçage (2) à l'embouchure côté broche de perçage des trous de guidage (8), entre le corps de mandrin (6) et la bague de réglage (12).

18. Dispositif de perçage selon la revendication 17, caractérisé par le fait que lorsque les canaux (16.1 à 16.4) se terminent dans la paroi des trous de guidage (8) dans le corps de mandrin (6), les mors (9) comportent des rainures de nettoyage (38) qui communiquent avec lesdits canaux et s'étendent le long de l'axe du trou de guidage (8) concerné et/ou transversalement à celui-ci.

19. Dispositif de perçage selon la revendication 17, caractérisé par le fait que lorsque les conduits (16.3) se terminent dans les cavités (37), lesdites cavités (37) sont reliées par un canal annulaire (39) qui s'étend dans la direction périphérique du mandrin de perçage (2) et est ouvert vers l'extérieur par des évidements (40) dans la bague de réglage (12).

20. Dispositif de perçage selon une des revendications 1 à 15, caractérisé par le fait que dans le cas d'un mandrin de perçage (2) pourvu d'un dispositif de blocage (15) empêchant toute rotation intempestive de la bague de réglage (12), disposé entre la bague de réglage (12) et le corps de mandrin (6), un des conduits longitudinaux (16.6) au moins traverse les éléments du dispositif de blocage (15).

21. Dispositif de perçage selon une ou plusieurs des revendications 1 à 20, caractérisé par le fait que dans le corps de mandrin (6) présente un collet (41) disposé côté outil de perçage en amont de la chambre réceptrice (11), dont le diamètre intérieur est légèrement supérieur à la chambre réceptrice (11) et qui se raccorde à la chambre réceptrice (11) enformant un épaulement intérieur (42) et par le fait que des ouvertures (43) menant vers l'extérieur, dont la section va au moins jusqu'à l'épaulement intérieur (42), sont prévues dans la paroi du collet.

22. Dispositif de perçage selon la revendication 21, caractérisé par le fait que la section des ouvertures dans la paroi du collet interfère avec l'épaulement intérieur (42).

23. Dispositif de perçage selon la revendication 21 ou 22, caractérisé par le fait que le collet porte côté extérieur une douille de guidage (44) qui s'évase en direction de la bague de réglage et qui avec le collet (41) et le corps de mandrin (6), définit une chambre annulaire (45) qui communique avec les ouvertures (43) du collet (41) et est ouverte vers l'extérieur par un espace annulaire entre la douille de guidage (44) et la bague de réglage (12).

24. Dispositif de perçage selon la revendication 23, caractérisé par le fait que des nervures transversales ou des saillies autres sont prévues dans la chambre annulaire (45), lesquelles sailles agissent à la manière d'ailettes de ventilateur lors de la rotation du mandrin de perçage (2).
